# EUROPÄISCHE PATENTSCHRIFT

(11) **EP 1 029 725 B1**
(45) Veröffentlichungstag und Bekanntmachung des Hinweises auf die Patenterteilung: **04.06.2003**
(21) Anmeldenummer: 00101935.5
(22) Anmeldetag: 01.02.2000
(51) Int. Cl.: B60J 3/02, B60R 1/00

(54) **Sonnenblende für Fahrzeuge**
Sun visor for vehicles
Pare-soleil pour véhicules

(30) Priorität: 20.02.1999 DE 19907403
(43) Veröffentlichungstag der Anmeldung: 23.08.2000
(73) Patentinhaber: Johnson Controls Interiors GmbH & Co. KG, 42285 Wuppertal (DE)
(72) Erfinder: Viertel, Lothar, 66802 Altforweiler (DE)
(74) Vertreter: Hemmelmann, Klaus

(56) Entgegenhaltungen:
- DE-A- 19 643 195
- DE-C- 19 713 759

## Beschreibung

Die Erfindung bezieht sich auf eine Sonnenblende für Fahrzeuge.

Die DE 38 14 182 A1 zeigt eine Sonnenblende für Fahrzeuge mit einem Sonnenblendenkörper, einer Ausnehmung in einer Breitseite des Sonnenblendenkörpers und einer in die Ausnehmung eingesetzten Spiegelbaueinheit, welche einen Planspiegel, einen Hohlspiegel und eine Abdeckklappe aufweist.

In der Druckschrift gemäß DE 296 08 764 U1 ist eine Sonnenblende für Fahrzeuge mit einem Sonnenblendenkörper, einer Ausnehmung in einer Breitseite des Sonnenblendenkörpers und einer in die Ausnehmung eingesetzten Spiegelbaueinheit, welche einen Planspiegel und einen Hohlspiegel aufweist, gezeigt. Die Spiegelbaueinheit umfaßt eine Spiegelkassette in welcher der Planspiegel und der Hohlspiegel aufgenommen sind, wobei der Planspiegel gegenüber dem Hohlspiegel oder der Hohlspiegel gegenüber dem Planspiegel klapp- oder schiebbar bewegbar sein soll.

Der Erfindung liegt die Aufgabe zugrunde eine Sonnenblende der eingangs genannten Art zur Verfügung zu stellen, die sich gegenüber dem aufgezeigten Stand der Technik durch verbesserte Gebrauchseigenschaften auszeichnen soll und deren Spiegelbaueinheit einfach in der Herstellung und insbesondere auch in der Handhabung, was vornehmlich für die von den Verbrauchern geforderte Spiegelabdeckung gilt, wenn der Normalspiegel (Planspiegel) und/oder der Vergrößerungsspiegel (Hohlspiegel) zeitweilig nicht benutzt oder benötigt wird bzw. werden.

Gelöst wird diese Aufgabe erfindungsgemäß durch eine Sonnenblende mit den Merkmalen gemäß Anspruch 1.

Der besondere Vorteil der Erfindung wird darin gesehen, daß im Spiegelfeld wahlweise der Planspiegel, der Hohlspiegel oder der Abdeckschieber sichtbar ist. Einer der beiden Spiegel, z. B. der Hohlspiegel befindet sich stets im Bereich des Spiegelfelds und kann durch Verschieben des Abdeckschiebers freigelegt oder, um eine Blendung auszuschließen, abgedeckt werden. Der andere Spiegel, z. B. der Planspiegel befindet sich in seiner Normallage außerhalb des Spiegelfelds, kann aber durch eine einfache Verschiebung in den Spiegelfeldbereich bewegt und damit in Benutzung genommen werden. In diesem Fall kann sich der Abdeckschieber zwischen dem Hohlspiegel und dem Planspiegel befinden.

Vorteilhafte Ausgestaltungen und Weiterbildungen der Erfindung sind in den Unteransprüchen angegeben.

Ein Ausführungsbeispiel der Erfindung wird nachfolgend anhand der Zeichnungen näher erläutert, und es zeigen:
- Fig. 1: eine Sonnenblende in Ansicht und
- Fig. 2: einen Schnitt etwa folgend der Linie A - A in Fig. 1.

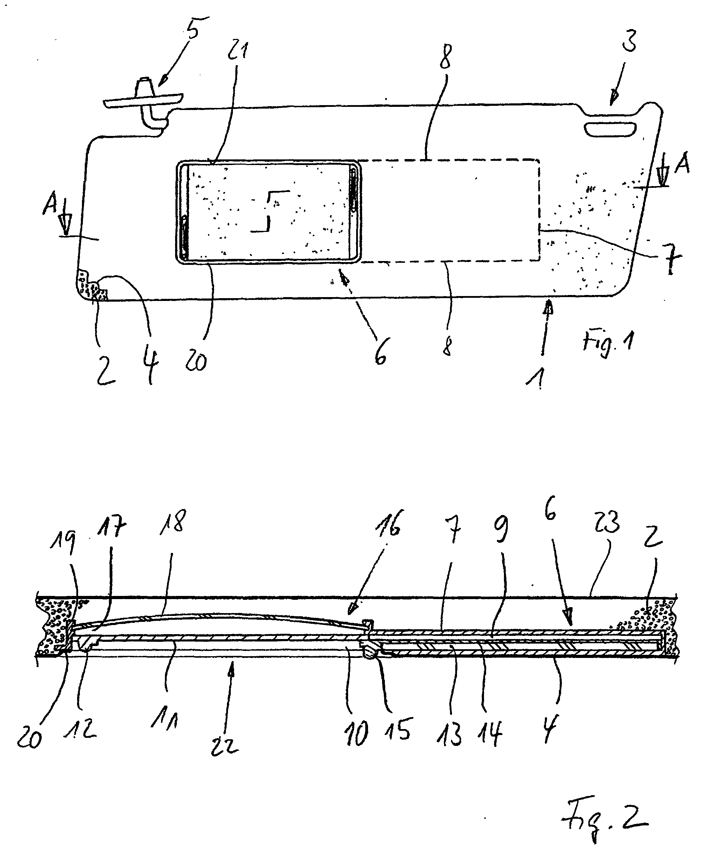

Fig 1 stellt eine komplette Sonnenblende 1 dar, bestehend aus einem Sonnenblendenkörper 2 mit angebildetem Gegenlagerbereich 3, einem Umhüllungsmaterial 4 einem Lagerelement 5 und einer kompletten Spiegelbaueinheit 6, die im Sonnenblendenkörper 2, wie in Fig. 2 Schnitt A - A dargestellt, vertieft eingelassen ist.

Die komplette Spiegelbaueinheit 6 besteht aus einem etwa rechteckig ausgebildeten Kassettenrahmen 7, der an seinen gegenüberliegenden Innenlängsseiten 8 mit zwei voneinander getrennten Führungsnuten 9 und 10 versehen ist, wobei die Führungsnut 9 dazu dient, der Kunststoff-Schiebeabdeckung (Abdeckungsschieber 11) mit örtlich angebildeter Griffleiste 12, eine Gleitführung zu bieten. Die Führungsnut 10 dient dazu, einem Normalspiegel (Planspiegel 13) und einer partiellen Kunststoffumrahmung 14 und daran örtlich angebildeter Griffleiste 15 eine Gleitführung zu bieten.

Der Kassettenrahmen 7 hat örtlich an seiner Rückseite 16 einen etwa rechteckigen Materialfreibereich 17, der dazu dient einen z. B. rechteckigen konkaven Spiegel (Hohlspiegel 18) aufzunehmen bzw. auszufüllen, der durch z. B. Klipsnasen 19 befindlich. an der Rückseite 16 des Kassettenrahmens 7 dort eingeklipst wird.

Bei der Herstellung wird zunächst der Kassettenrahmen 7, ein Kunststoffspritzling, entsprechend Fig. 2 mit dem Umhüllungsmaterial 4 verbunden, und zwar mittels einer Rundumschweißnaht 20, wodurch u. a. auch ein etwa rechteckiges Öffnungsfenster 21 gebildet wird.

Der Normalspiegel 13, vorzugsweise aus Glas, wird mit seiner partiellen Kunststoffumrahmung 14 mit daran angebildeter Griffleiste 15 in seine Führungsnut 10 im Kassettenrahmen 7 eingeführt. Danach wird die Kunststoff-Schiebeabdeckung 11 in ihre vorgesehene Führungsnut 9 im Kassettenrahmen 7, wie im Schnitt A - A dargestellt, eingeführt. Zum Schluß erfolgt die Montage des konkaven Spiegels 18, bevorzugterweise aus Glas.

Mit dieser Baugruppe wird nun der Sonnenblendenkörper 2 bestückt und mit dem rückseitigen Umhüllungsmaterial 23 und 4 rundum abgeschweißt.

Danach stellt sich folgende Ausgangssituation dar:

Die Schiebeabdeckung 11 ist geschlossen, der nicht bewegliche konkave Spiegel 18 befindet sich hinter der Schiebeabdeckung 11, ist also abgedeckt. Der Normalspiegel 13 mit seiner Umrahmung 14 ist nicht sichtbar, weil abgedeckt durch den Kassettenrahmen 7 mit taschenförmiger Aufnahme und dem Umhüllungsmaterial. Das optische Erscheinungsbild des Spiegelfelds 22 stellt sich somit wie in Fig. 1 dargestellt dar. Aus dieser Ausgangsposition ergeben sich nun folgende Bedienungsvariationen:

Der Schieber 11 wird nun über seine Griffleiste 12, die sich im unteren Hälftenbereich befindet, geöffnet, verschoben und der Betrachter schaut direkt in den konkaven Spiegel 18, oder der Schieber 11 bleibt geschlossen (entsprechend Fig. 2 Schnitt A - A) und der Normalspiegel 13 wird mittels einer angebildeten Griffleiste 15, die sich im oberen Hälftenbereich befindet, aus seiner Stellung, entsprechend Fig. 2, vor den Schieber 11 geschoben, wonach der Betrachter in den Normalspiegel 13 schaut.

Will der Betrachter nun von dem Normalspiegel 13 direkt in den Vergrößerungsspiegel 18 schauen, kann dieser die Griffleiste 12 des Schiebers 11 benutzen, wobei der Normalspiegel 13, der vor dem Schieber 11 positioniert ist; automatisch mitverschoben werden kann. Zum Verschließen des nun einsehbaren konkaven Spiegels 18 wird über die Griffleiste 12 des Schiebers 11 dieser vor den Vergrößerungsspiegel 18 geschoben und das Erscheinungsbild ist, entsprechend der Fig. 1, gegeben.

## Patentansprüche

1. Sonnenblende für Fahrzeuge mit
- einem Sonnenblendenkörper (2),
- einer Ausnehmung in einer Breitseite des Sonnenblendenkörpers (2),
- einer in die Ausnehmung eingesetzten Spiegelbaueinheit (6), welche
- einen Planspiegel (13), einen Hohlspiegel (18) und einen Abdeckschieber (11) aufweist und
- einem den Sonnenblendenkörper (2) umgebenen ümhüllungsmaterial (4, 23) mit einer ein Spiegelfeld (22) freilassenden Öffnung,
wobei die Anordnung so getroffen ist, daß im Spiegelfeld (22) wahlweise der Planspiegel (13), der Hohlspiegel (18) oder der Abdeckschieber (11) sichtbar ist, indem der Abdeckschieber (11) über einen der beiden Spiegel (Planspiegel 13 oder Hohlspiegel 18), der im Bereich des Spiegelfelds (22) starr mit der Spiegelbaueinheit (6) verbunden ist, schiebbar ist und der andere der beiden Spiegel (Planspiegel 13 oder Hohlspiegel 18) über den Abdeckschieber (11) schiebbar ist.

2. Sonnenblende nach Anspruch 1, **dadurch gekennzeichnet, daß** die Spiegelbaueinheit (6) einen Kassettenrahmen (7) mit Halterungen, wie Klipsnasen (19) für einen der beiden Spiegel (Planspiegel 13 oder Hohlspiegel 18), Führungsnuten (9) für den anderen der beiden Spiegel (Planspiegel 13 oder Hohlspiegel 18) und Führungsnuten (10) für den Abdeckschieber (11) aufweist.

3. Sonnenblende nach Anspruch 1 oder 2, **dadurch gekennzeichnet, daß** die Spiegelbaueinheit (6) eine taschenförmige Aufnahme für den verschiebbaren Spiegel (Planspiegel 13 oder Hohlspiegel 18) und für den Abdeckschieber (11) in der Nichtgebrauchslage aufweist.

4. Sonnenblende nach wenigstens einem der Ansprüche 1 bis 3, **dadurch gekennzeichnet, daß** der verschiebbare Spiegel (Planspiegel 13 oder Hohlspiegel 18) ebenso wie der Abdeckschieber 11 mit einer Verschiebehandhabe, wie Griffleiste (12, 15) ausgestattet ist.

## Claims

1. Sun visor for vehicles, having
- a sun visor body (2),
- a recess in a broad side of the sun visor body (2),
- a modular mirror unit (6) which is inserted into the recess and has
- a plane mirror (13), a concave mirror (18) and a covering slide (11), and
- a casing material (4, 23) which surrounds the sun visor body (2) and has an opening leaving a mirror zone (22) free,
the arrangement being undertaken in such a manner that either the plane mirror (13), the concave mirror (18) or the covering slide (11) is visible in the mirror zone (22) by the covering slide (11) being slidable over one of the two mirrors (plane mirror 13 or concave mirror 18), which is connected rigidly to the modular mirror unit (6) in the region of the mirror zone (22), and the other of the two mirrors (plane mirror 13 or concave mirror 18) being slidable over the covering slide (11).

2. Sun visor according to Claim 1, **characterized in that** the modular mirror unit (6) has a cassette frame (7) having securing devices, such as clip lugs (19), for one of the two mirrors (plane mirror 13 or concave mirror 18), guide grooves (9) for the other of the two mirrors (plane mirror 13 or concave mirror 18) and guide grooves (10) for the covering slide (11).

3. Sun visor according to Claim 1 or 2, **characterized in that** the modular mirror unit (6) has a pocket-shaped receptacle for the displaceable mirror (plane mirror 13 or concave mirror 18) and for the covering slide (11) in the position in which it is not in use.

4. Sun visor according to at least one of Claims 1 to 3, **characterized in that** the displaceable mirror (plane mirror 13 or concave mirror 18) is, like the covering slide (11), provided with a displacement handle, such as a gripping strip (12, 15).

## Revendications

1. Pare-soleil pour véhicules, comprenant :
- un corps de pare-soleil (2),
- un évidement dans un côté large du corps de pare-soleil (2),
- une unité constructive de miroir (6) insérée dans l'évidement, laquelle
- présente un miroir plan (13), un miroir concave (18), et un coulisseau de recouvrement (11) et
- un matériau d'enveloppe (4, 23) entourant le corps de pare-soleil (2) et comprenant une ouverture libérant un champ du miroir (22),
l'agencement étant tel que dans le champ du miroir (22), le miroir plan (13), le miroir concave (18) ou le coulisseau de recouvrement (11) soient visibles au choix, en ce que le coulisseau de recouvrement (11) peut coulisser sur l'un des deux miroirs (miroir plan 13 ou miroir concave 18), qui est connecté rigidement dans la région du champ du miroir (22) à l'unité constructive de miroir (6), et l'autre des deux miroirs (miroir plan 13 ou miroir concave 18) peut coulisser sur le coulisseau de recouvrement (11).

2. Pare-soleil selon la revendication 1, **caractérisé en ce que** l'unité constructive de miroir (6) présente un cadre de cassette (7) avec des fixations telles que des nez d'enclipsage (19) pour l'un des deux miroirs (miroir plan 13 ou miroir concave 18), des rainures de guidage (9) pour l'autre des deux miroirs (miroir plan 13 ou miroir concave 18) et des rainures de guidage (10) pour le coulisseau de recouvrement (11).

3. Pare-soleil selon la revendication 1 ou 2, **caractérisé en ce que** l'unité constructive de miroir (6) présente un logement en forme de poche pour le miroir déplaçable (miroir plan 13 ou miroir concave 18) et pour le coulisseau de recouvrement (11) dans la position de non-utilisation.

4. Pare-soleil selon au moins l'une des revendications 1 à 3, **caractérisé en ce que** le miroir déplaçable (miroir plan 13 ou miroir concave 18) est équipé tout comme le coulisseau de recouvrement 11, d'une poignée de déplacement, comme une barre de saisie (12, 15).
